**Europäisches Patentamt**

**European Patent Office**

**Office européen des brevets**

(11) Veröffentlichungsnummer: **0 164 533**
**B1**

(12) **EUROPÄISCHE PATENTSCHRIFT**

(45) Veröffentlichungstag der Patentschrift:
**19.04.89**

(51) Int. Cl.⁴: **C 01 G 49/00, H 01 F 1/11**

(21) Anmeldenummer: **85104901.5**

(22) Anmeldetag: **23.04.85**

(54) **Verfahren zur Herstellung feinteiliger, nadelförmiger und hochkoerzitiver hexagonaler Ferrite.**

(30) Priorität: **14.05.84 DE 3417793**

(43) Veröffentlichungstag der Anmeldung:
**18.12.85 Patentblatt 85/51**

(45) Bekanntmachung des Hinweises auf die Patenterteilung:
**19.04.89 Patentblatt 89/16**

(84) Benannte Vertragsstaaten:
**DE FR GB NL**

(56) Entgegenhaltungen:
**EP-A-0 072 437**
**EP-A-0 091 640**
**DE-B-2 212 435**
**GB-A-2 108 100**

(73) Patentinhaber: **BASF Aktiengesellschaft, Carl-Bosch- Strasse 38, D-6700 Ludwigshafen (DE)**

(72) Erfinder: **Hibst, Hartmut, Dr., Sternstrasse 215, D-6700 Ludwigshafen (DE)**
Erfinder: **Rudolf, Peter, Dr., Nibelungenweg 14, D-6701 Maxdorf (DE)**
Erfinder: **McKee, Graham Edmund, Dr., Kastanienweg 8, D-6940 Weinheim (DE)**

## Beschreibung

Die Erfindung betrifft ein Verfahren zur Herstellung feinteiliger, nadelförmiger und hochkoerzitiver hexagonaler Ferrite der allgemeinen Formel $MFe_{12}O_{19}$, in der M Barium oder Strontium bedeuten.

Für eine Reihe von Anwendungen auf dem gebiet der fälschungssicheren Codierung, z. B. bei Identitätsausweisen, Kreditkarten sowie magnetischer Speicherung von sonstigen Kennungen, ist es wünschenswert, magnetische Aufzeichnungsträger zur Verfügung zu haben, welche eine gegenüber den derzeitigen Standardspeichermedien höhere Koerzitivfeldstärke aufweisen. Entsprechende Materialien wären gegenüber magnetischen Fremdfeldern unempfindlicher und somit nur unter erschwerten Bedingungen zu fälschen.

Weiterhin werden zur Herstellung von Echolöscheinrichtungen in Bandkassetten zur Erhöhung der Kopierdämpfung von Magnetbändern gemäß DE-U-8 235 253 sehr hochkoerzitive Plastoferritmaterialien benötigt.

Hierfür werden üblicherweise hexagonale Ferrite der allgemeinen Formel $MFe_{12}O_{19}$, in der M Barium oder Strontium bedeuten, verwendet.

Ferritpulver für die Herstellung von weitgehend fälschungssicheren magnetischen Aufzeichnungen werden üblicherweise nach dem keramischen Verfahren hergestellt. Dazu werden Bariumcarbonat bzw. Strontiumcarbonat und Eisenoxid in dem Verhältnis, das der chemischen Formel des späteren Ferrits entspricht, gemischt und diese Mischung einer Wärmebehandlung, dem sogenannten Vorsintern, bei Temperaturen zwischen 1100°C und 1300°C unterworfen. Beim Vorsintern bildet sich der magnetische Hexaferrit. Die entstandenen versinterten Konglomerate aus Kristalliten werden anschließend meist unter Zusatz von Wasser zu einem Pulver, dessen Teilchengröße rund 1 μm beträgt, gemahlen. Durch das Mahlen entstehen Kristallbaufehler in den Teilchen, die eine Erniedrigung der Koerzitivfeldstärke zur Folge haben. So hergestellte Ferritpulver weisen im allgemeinen eine recht gute spezifische remanente Magnetisierung auf, die Magnetisierungskoerzitivfeldstärke $_jH_c$ liegt aber mit etwa 200 kA/m vor dem Mahlen und kleiner 150 kA/m nach dem Mahlen recht niedrig. Diese durch das Mahlen hervorgerufenen Kristallbaudefekte lassen sich durch ein Nachtempern nach dem Mahlen oder durch einen Sinterprozeß nur zum Teil ausheilen, wobei Koerzitivfeldstärken von bis zu 300 kA/m erreicht werden. Allerdings führt diese Nachtemperung in nachteiliger weise zu einem weitgehenden Verlust der Pigmentfeinteiligkeit. Wird ein auf diese Weise durch Mahlung und anschließende Temperung erhaltenes grobteiliges Bariumferritpulver mit einem hohen Füllgrad in eine Kunststoffschmelze eingearbeitet, so hat dies durch den erforderlichen Knetprozeß einen sehr starken Abfall der Koerzitivfeldstärke zur Folge.

Weiterhin sind zur Herstellung von hexagonalen Ferritpulvern sogenannte Fluxverfahren bekannt, bei denen Flußmittel zur Förderung der Reaktion zwischen den einzelnen Metalloxiden eingesetzt werden, wie z. B. $B_2O_3$, Alkaliborate, PbO, Alkaliferrite, $Bi_2O_3$, Molybdate, Alkalihalogenide und -sulfate. So wird nach der US-A-3 093 589 Bariumferrit durch Temperung eines Gemenges aus $BaCO_3$, nadelförmigem $\alpha$-FeOOH und eines katalytisch wirkenden Bariumchloridzusatzes von 0,1 bis 1 Gew.-% bei 890 bis 980°C hergestellt. Es fallen unregelmäßig geformte plättchenförmige Kristalle mit geraden Kanten an. Die US-A-3 793 443 beschreibt ein Verfahren zur Herstellung von $BaFe_{12}O_{19}$-Pulver aus einem Gemenge von $BaCO_3$, FeOOH und Alkalimetallchlorid durch Temperung bei 1000°C. Nach Auswaschen des Alkalihalogenids werden gleichmäßig hexagonale Kristallplättchen erhalten. In der US-A-3 903 228 wird ein Verfahren offenbart bei dem ein homogenes Gemenge aus $BaCO_3$, feinteiligem nadelförmigem $\alpha$-$Fe_2O_3$ mit einer spezifischen Oberfläche von größer 20 m²/g mit einem NaF-Zusatz von 3 bis 10 Gew.-% bei 950 bis 1100°C getempert wird. Nach dem Auswaschen werden Kristallplättchen mit einem Plättchendurchmesser von kleiner 1 μm erhalten. Nach der US-A-4 042 516 wird bei der Temperung eines Gemenges aus 1 Mol $SrCO_3$, 6 Mol nadelförmigem $\alpha$-FeOOH und 0,05 bis 2 Mol $SrCl_2$ bei 1000°C und anschließender Extraktion mit Wasser plättchenförmiger Sr-Ferrit mit einer Plättchengröße von etwa 2 μm erhalten. Die Fluxverfahren haben den großen Nachteil, daß die erhaltenen Temperprodukte im allgemeinen durch einen Auswaschprozeß mit Wasser oder verdünnten Säuren vom katalytisch wirkenden Flußmittelanteil befreit werden müssen. Außerdem wirken die zugesetzten Flußmittel meist stark korrosionsfördernd und können sowohl das eingesetzte Tiegelmaterial schädigen als auch durch ihre hohe Flüchtigkeit die eingesetzten Öfen zerstören.

Weiterhin sind Verfahren zur Herstellung von Bariumferrit bekannt, bei denen von definierten Eisenoxidhydratpulvern ohne Zusatz von katalytisch wirkenden Flußmitteln ausgegangen wird. So beschreibt die DE-B-1 911 318 ein Verfahren zur Herstellung von magnetisch anisotropen Dauermagneten durch einmalige Temperung eines aus $BaCO_3$ und nadelförmigem $\alpha$- oder $\gamma$-FeOOH bestehenden Preßlings bei 1190 bis 1300°C, in dem die FeOOH-Nadeln durch einen vorangegangenen Preßprozeß senkrecht zur Preßrichtung mechanisch ausgerichtet worden sind. Gemäß der US-A-3 723 587 wird in einem zweistufigen Verfahren zur Herstellung von magnetisch anisotropen Dauermagneten ein Gemenge aus $BaCO_3$ und nadelförmigem $\alpha$-FeOOH vorgepreßt und der erhaltene Formkörper bei 1000°C vorgetempert. Anschließend wird der vorgetemperte Formkörper einer Hauptpressung unterworfen, bei einem Druck, der oberhalb der Vorpressung liegt. Abschließend erfolgt eine Haupttemperung bei 1250°C. In der JP-B-5 4142 198 wird ein Verfahren zur Herstellung von plättchenförmigem Ba- und Sr-Ferrit beschrieben, bei dem von einem gerichteten Filterkuchen bestehend aus $BaCO_3$ bzw. $SrCO_3$ und nadelförmigem $\alpha$-FeOOH ausgegangen wird. Dazu wird eine Suspension aus $BaCO_3$ bzw. $SrCO_3$ und nadelförmigem $\alpha$-FeOOH in einer speziellen Weise, z. B. unter Verwendung einer Schwerkraftfiltration, so filtriert, daß im erhaltenen Filterkuchen die FeOOH-Nadeln parallel zur Filtratfläche zu liegen kommen und dabei von feinteiligem $BaCO_3$ bzw. $SrCO_3$ eingebettet sind. Der erhaltene Filterkuchen wird als ganzes in unzerkleinerter Form oder in Form würfelförmiger 10 bis 20 mm großer Stücke bei 1100°C getempert, wobei die FeOOH-Nadeln unter Reaktion mit $BaCO_3$ oder $SrCO_3$ zu plättchenförmigem hexagonalem Ferrit mit einem Teilchendurchmesser won 0,5 bis 1,5 $\mu$m zusammenwachsen. Anschließend wird das erhaltene Sintergut pulverisiert. Die erhaltenen Bariumferritpulver besitzen eine Koerzitivfeldstärke von 200 kA/m, die erhaltenen Strontiumferritpulver besitzen $_jH_c$-Werte von 223 kA/m. Von R. Takada et al. (Proc. Intern. Conf. on Ferrites, July 1970, Japan, S. 275 bis 278) wurde die Herstellung von $SrFe_{12}O_{19}$-Dauermagneten durch eine einmalige Sinterung bei 1200 bis 1300°C von Preßlingen, bestehend aus $SrCO_3$ und nadelförmigem $\alpha$-FeOOH, elektronenoptisch untersucht. Danach verläuft die Sr-Ferritbildung in den Preßlingen topotaktisch, wobei die kristallographische (100)-Ebene vom $\alpha$-FeOOH in die (0001)-Ebene vom $SrFe_{12}O_{19}$ übergeht. L. Girada et al. (J. de Physique, Cl, Suppl. 4, **38**, 1977, S. Cl-325) gelang es erstmalig durch Umsetzung von einem pulverförmigen, nicht verpreßten oder verformten Gemenge, bestehend aus $SrCO_3$ und nadelförmigem $\alpha$-FeOOH mit einer spezifischen Oberfläche von 13,1 $m^2$/g, bei 1050°C in einem Hochtemperaturfließbett zu einem hochkoerzitiven Sr-Ferritpulver ($H_c$ = 446 kA/m) mit einer spezifischen Oberfläche von 3 bis 4 $m^2$/g zu gelangen. Die Autoren führen die erforderliche, vergleichsweise niedrige Reaktionstemperatur von 1050°C, die resultierende hohe Pigmentfeinteiligkeit, die erhaltene enge Teilchengrößenverteilung und die sich daraus ergebende hohe Koerzitivfeldstärke auf die angewendete, aufwendige Hochtemperaturfließbett-Technik zurück.

Es bestand daher die Aufgabe, ein wirtschaftliches Verfahren zur Herstellung eines magnetischen Materials bereitzustellen, das den Anforderungen genügt, welche an ein magnetisches Material für die Verwendung in den angegebenen magnetischen Aufzeichnungsträgern und in Plastoferritmaterialien gestellt werden. Ein solches Material sollte sich vor allem durch eine gute Dispergierbarkeit für die Einarbeitung in organische Bindemittel, durch eine hohe Feinteiligkeit bei enger Teilchengrößenverteilung und durch eine hohe Koerzitivfeldstärke auszeichnen.

Es wurde nun überraschenderweise gefunden, daß sich Ferrite $MFe_{12}O_{19}$ mit M = Ba, Sr auf einfachem Wege mit den aufgabengemäß geforderten Eigenschaften und mit einem nadelförmigen Kristallhabitus herstellen lassen, wenn eine neutrale wäßrige Dispersion von nadelförmigem Eisen(III)oxidhydroxid mit einer wäßrigen Bariumchlorid- oder Strontiumchloridlösung und einer Natriumcarbonatlösung umgesetzt, die resultierende Mischung erhitzt, der Feststoffanteil der erhaltenen Dispersion von der wäßrigen Phase abgetrennt, ausgewaschen, getrocknet und zerkleinert und das erhaltene Pulver auf Temperaturen von 800 bis 1070°C erhitzt wird.

Als nadelförmige Eisen(III)oxidhydroxide eignen sich $\alpha$-FeOOH und besonders $\alpha$-FeOOH. Für das erfindungsgemäße Verfahren sind diese Teilchen besonders geeignet, wenn sie eine spezifische Oberfläche von 15 bis 80, vorzugsweise von 20 bis 50 $m^2$/g und ein Längen-zu-Dickenverhältnis von 2 bis 30, vorzugsweise von 5 bis 25 aufweisen. Die Herstellung dieser Eisen(III)oxidhydroxide ist bekannt. So kann das $\alpha$-FeOOH beispielsweise gemäß der in der DE-A-1 592 598 offenbarten Verfahrenweise gewonnen werden, während sich das $\gamma$-FeOOH gemäß der DE-B-1 061 760, der DE-C-1 223 352 oder DE-A-2 212 435 herstellen läßt.

Zur Durchführung des erfindungsgemäßen Verfahrens wird die wäßrige Dispersion des nadelförmigen FeOOH mit einer wäßrigen Lösung des $MCl_2$ und einer wäßrigen Natriumcarbonatlösung unter Rühren versetzt. Das molare Fe/M-Verhältnis beträgt vorteilhafterweise 9 bis 12 und das molare Na/M-Verhältnis 2 bis 4. Danach wird die Reaktionsmischung 0,5 bis 3 Stunden lang auf Temperaturen von 60 bis 100°C erhitzt. Nach dem Abkühlen wird der Feststoffanteil der erhaltenen wäßrigen Dispersion von der wäßrigen Phase abgetrennt, was üblicherweise durch Filtration geschieht, mit Wasser chloridfrei gewaschen und getrocknet. Die Zerkleinerung der erhaltenen Trockenmasse auf eine Teilchengröße von 0,1 bis 5, vorzugsweise 0,1 bis 1 mm wird über einen trockenen Mehl- und anschließenden Siebprozeß erreicht. Die pulverisierte Trockenmasse wird nun 0,5 bis 3 Stunden lang auf eine Temperatur von 800 bis 1070°C erhitzt. Das erhaltene Material gehört zur Gruppe der hexagonalen Ferrite und läßt sich mit der Formel $MFe_{12}O_{19}$ (M = Ba, Sr) beschreiben.

Aufgrund des erfindungsgemäßen Verfahrens lassen sich diese Ferrite unmittelbar als feinkörnige, unversinterte Pulver gewinnen. Sie bestehen aus sehr kleinen Kristallnadeln, die im wesentlichen die Kristallform des eingesetzten nadelförmigen FeOOH besitzen und eine spezifische Oberfläche von größer 5 $m^2$/g aufweisen. Wird von nadelförmigem $\alpha$-FeOOH ausgegangen, so zeichnen sich die erfindungsgemäß hergestellten Ferrite im Falle von $BaFe_{12}O_{19}$ durch eine unerwartet hohe Koerzitivfeldstärke von 420 kA/m und im Fall von $SrFe_{12}O_{19}$ durch eine solche von 520 kA/m aus. Dieser Wert übertrifft den von L. Giarda mit dem Fließbettverfahren erreichen $H_c$-wert von $SrFe_{12}O_{19}$ um mehr als 70 kA/m. Weiterhin wurde überraschenderweise gefunden, daß bei der Verwendung von nadelförmigem $\gamma$-FeOOH als Ausgangsstoff hexagonale Ferritpigmente mit noch höherer Koerzitivfeldstärke anfallen. So werden im Felle von $BaFe_{12}O_{19}$ $H_c$-werte von 450 kA/m gemessen, für $SrFe_{12}O_{19}$ ergeben sich sogar solche von 540 kA/m. Besonders vorteilhaft ist die gute Dispergierbarkeit der erfindungsgemäßen Ferritpigmente in organischen Bindemitteln, Harzen oder Polymeren.

Darüber hinaus zeichnet sich das erfindungsgemäße Verfahren gegenüber den bekannten Fluxverfahren dadurch aus, daß auf die Anwendung von korrosionsfördernden Flußmitteln, die außerdem nachträglich wieder ausgewaschen werden müssen, verzichtet werden kann. Auch lassen sich die FeOOH-Nadeln in einem dem Temperschrift vorausgehenden Fällungsprozeß mit sehr feinteiligem $MCO_3$ (M = Ba, Sr) gleichmäßig umhüllen. Das Umhüllen der FeOOH-Nadeln bietet den Vorteil von kurzen Diffusionswegen bei der nachfolgenden Feststoffreaktion. Dies wiederum hat niedrigere Reaktionstemperaturen und einen verbesserten Erhalt der Nadelform zur Folge als dies bei der konventionellen Vermahlung der Ausgangskomponenten erreicht werden kann.

Als weiterer Vorteil muß bei dem erfindungsgemäßen Verfahren angesehen werden, daß das trockene Gemenge aus $MCO_3$ und nadelförmigem FeOOH zur Temperung in zerkleinerter Form eingesetzt wird. Damit erfordert das erfindungsgemäße Verfahren keine aufwendigen Kompaktier- oder Tablettiertechniken und keine speziellen Filtrationstechniken, wie sie zur Herstellung von Formkörpern mit einer mechanischen Ausrichtung der FeOOH-Nadeln erforderlich sind.

Weiterhin sind bei dem erfindungsgemäßen Verfahren zur Temperung des Gemenges aus $MCO_3$ und FeOOH keine speziellen und aufwendigen Sintertechniken, wie z. B. eine Hochtemperaturfließbett-Technik erforderlich. Statt dessen wird die Temperung über konventionelle Techniken, wie z. B. durch Erhitzen in Tiegeln, Schalen oder Drehrohröfen vorgenommen. Daraus ergeben sich als überraschender Vorteil des erfindungsgemäßen Verfahrens gegenüber dem konventionellen Temperverfahren niedrigere Reaktionstemperaturen.

Die vorteilhaften Teilcheneigenschaften bewirken sowohl gute magnetische Eigenschaften als auch ein verbessertes Dispergierverhalten in organischen Bindemitteln, Harzen und Polymeren. Wegen dieser guten Dispergierbarkeit sind die erfindungsgemäß hergestellten Ferritpigmente besonders für die Verwendung als magnetisches Material bei der Herstellung von magnetischen Aufzeichnungsträgern und von magnetischen Plastoferriten geeignet. Dabei sind die erfindungsgemäß hergestellten Ferritpulver so feinteilig, daß die daraus hergestellten Magnetschichten auch bei geringen Schichtdicken eine hervorragende Oberflächengüte aufweisen. Weiterhin zeigen die erfindungsgemäß hergestellen feinteiligen Ferritpulver, verglichen mit herkömmlichen grobteiligeren Ferritprodukten, verbesserte magnetische Eigenschaften im magnetischen Aufzeichnungsträger oder im Plastoferrit. So bleiben bei der Einarbeitung der erfindungsgemäß hergestellten hexagonalen Ferritpulver in eine organische Matrix deren hohe Koerzitivfeldstärken voll erhalten, so daß sehr hochkoerzitive magnetische Aufzeichnungsträger und magnetische Plastoferritmaterialien mit Koerzitivfeldstärken bis etwa 550 kA/m hergestellt werden können. Wie Bandgießversuche zur Herstellung von Magnetbändern für die magnetische Informationsspeicherung gezeigt haben, kann die Koerzitivfeldstärke bei der Einarbeitung eines erfindungsgemäß hergestellten Ferritpulvers in ein organisches Bindemittel sogar um bis zu 30 kA/m ansteigen. Die Koerzitivfeldstärke von herkömmlichen, keramisch hergestellten, grobteiligeren Ferritpulvern fällt dagegen bei der Einarbeitung in ein organisches Matrixmaterial unter vergleichbaren Dispergierbedingungen sehr stark ab. Dies läßt sich mit einer mechanischen Zerstörung der Ferritteilchen erklären.

Aufgrund der hohen $_jH_c$-Werte der erfindungsgemäß herstellbaren Ferrit-Polymer-Verbundmaterialien ist es schwierig, eine einmal vorgenommene magnetische Aufzeichnung bzw. Dauermagnetisierung wieder zu verändern, so daß ein stabiler dauermagnetischer Zustand erreicht wird. Damit sind magnetische Aufzeichnungen in magnetischen Aufzeichnungsträger gegen zufällig vorliegende Fremdfelder weitgehend unempfindlich und stabil und in gewissem Umfang auch fälschungssicher. Im Falle von Echolöscheinrichtungen, die aus dem erfindungsgemäß hergestellten Plastoferritgranulat in vorteilhafter Weise gefertigt werden können, ist der üblicherweise durch eine Impulsmagnetisierung mit hohen Feldstärken hervorgerufene dauermagnetische Zustand gegen entmagnetisierende Felder des vorbeilaufenden Magnetbandes völlig stabil. Deshalb wird mit den erfindungsgemäß aus hochkoerzitivem Plastoferritmaterial gefertigten Echolöscheinrichtungen eine starke Erhöhung und damit Verbesserung der Kopierdämpfung erreicht.

Die Erfindung sei anhand folgender Beispiele näher erläutert:

## Beispiel 1

Es wurde eine Dispersion bestehend aus 50,00 kg nadelförmigem $\alpha$-FeOOH mit einer spezifischen Oberfläche von 27 $m^2/g$ und einem Längen- zu-Dickenverhältnis von 10 und 500 l Wasser unter starkem Rühren hergestellt und mit einer Lösung von 12,835 kg $BaCl_2.2H_2O$ in 50 l Wasser versetzt. Anschließend wurde unter weiterem Rühren eine Lösung von 7,167 kg $Na_2CO_3$ in 40 l Wasser zugegeben. Die erhaltene Dispersion wurde unter Rühren aufgeheizt und 2 Stunden lang bei 90°C erhitzt. Nach dem Abkühlen wurde der Feststoffanteil der Dispersion über eine herkömmliche Filterpresse abfiltriert, mit Wasser chloridfrei gewaschen und getrocknet. Die erhaltene Trockenmasse wird in einer Mühle durch ein Sieb mit einem Maschenabstand von 0,3 mm trocken vermahlen und anschließend durch ein Sieb mit einem Maschenabstand von 0,3 mm passiert. Das zerkleinerte, gesiebte Pulver wird in einer Edelstahlschale 1 Stunde lang bei 1000°C getempert und danach abgekühlt. Das erhaltene im Röntgendiagramm einphasige $BaFe_{12}O_{19}$-Präparat besteht aus nadelförmigen Ferritteilchen mit einer spezifischen Oberfläche won 7,5 $m^2/g$. Die Koerzitivfeldstärke ($H_c$) beträgt 423 kA/m, die spezifische remanente Magnetisierung ($M_r/\int$) beträgt 42 $nTm^3/g$.

## Beispiel 2

Es wurde eine Dispersion bestehend aus 4,00 kg nadelförmigem $\alpha$-FeOOH mit einer spezifischen Oberfläche von 32 $m^2/g$ und einem Längen/Dickenverhältnis von 10 und 40 l Wasser unter starkem Rühren hergestellt und mit einer Lösung von 1,121 kg $SrCl_2.6H_2O$ in 4 l Wasser versetzt. Anschließend wurde unter weiterem Rühren eine Lösung von 0,5793 kg $Na_2CO_3$ in 3 l Wasser zugegeben. Die erhaltene Dispersion wurde unter Rühren aufgeheizt und 2 Stunden lang bei 90°C erhitzt. Nach dem Abkühlen wird der Feststoffanteil der Dispersion abfiltriert, mit Wasser chloridfrei gewaschen und getrocknet. Die erhaltene Trockenmasse wurde in einer Reibschale trocken zermahlen und anschließend durch ein Sieb mit einem Maschenabstand von 0,3 mm passiert. Das zerkleinerte, gesiebte Pulver wird in einer Edelstahlschale 1 Stunde lang bei 1000°C getempert und danach abgekühlt. Das erhaltene, im Röntgendiagramm einphasige $SrFe_{12}O_{19}$-Präparat besteht aus nadelförmigen Ferritteilchen mit einer spezifischen Oberfläche von 8,5 $m^2/g$. Die Koerzitivfeldstärke beträgt 521 kA/m, die spezifische remanente Magnetisierung beträgt 43 $nTm^3/g$.

## Beispiel 3

Es wurde eine Dispersion bestehend aus 4,00 kg nadelförmigem $\gamma$-FeOOH mit einer spezifischen Oberfläche von 32,8 $m^2/g$ und einem Längen- zu-Dickenverhältnis von 20 und 60 l Wasser mit Hilfe eines Ultra Turrax-Dispergiergerätes der Firma Kotthoff hergestellt und mit einer Lösung von 1,020 kg $BaCl_2.2H_2O$ in 4 l Wasser versetzt. Anschließend wurde unter weiterem Rühren eine Lösung von 0,575 kg $Na_2CO_3$ in 3 l Wasser zugegeben. Die erhaltene Dispersion wurde wie in Beispiel 2 beschrieben weiterbehandelt. Das nach einstündigem Tempern bei 970°C erhaltene, im Röntgendiagramm einphasige $BaFe_{12}O_{19}$-Präparat besteht aus nadelförmigen Ferritteilchen mit einer spezifischen Oberfläche von 8,1 $m^2/g$. Die Koerzitivfeldstärke beträgt 450 kA/m, die spezifische remanente Magnetisierung beträgt 42 $nTm^3/g$.

## Beispiel 4

Es wurde eine Dispersion bestehend aus 4,000 kg nadelförmigem $\gamma$-FeOOH mit einer spezifischen Oberfläche von 32,8 $m^2/g$ und einem Längen- zu-Dickenverhältnis von 20 und 60 l Wasser mit Hilfe eines Ultra Turrax-Dispergiergerätes der Firma Kotthoff hergestellt und mit einer Lösung von 1,113 kg $SrCl_2.6H_2O$ in 4 l Wasser versetzt. Anschließend wurde unter weiterem Rühren eine Lösung von 0,575 kg $Na_2CO_3$ in 3 l Wasser zugegeben. Die erhaltene Dispersion wurde wie in Beispiel 2 beschrieben weiterbehandelt. Das nach einstündigem Tempern bei 950°C erhaltene, im Röntgendiagramm einphasige $SrFe_{12}O_{19}$-Präparat besteht aus nadelförmigen Ferritteilchen mit einer spezifischen Oberfläche von 8,7 $m^2/g$. Die Koerzitivfeldstärke beträgt 539 kA/m, die spezifische remanente Magnetisierung beträgt 44 $nTm^3/g$.

## Beispiel 5

In einem Ko-Kneter PR 46 ohne Austragsschnecke der Firma Buss wurden 5,75 kg/h Bariumferritpulver aus Beispiel 1 in einen Polyamidschmelzenstrom von 1,25 kg/h aus Ultramid A3 der Firma BASF AG, stabilisiert mit 200 ppm CuJ und 800 ppm KJ, bei einer Temperatur von 280°C eindosiert und kontinuierlich verknetet und extrudiert. Das Bariumferritpulver und das Polymergranulat wurden dazu mit Differentialdosierwaagen der Firme K-tron Soder GmbH dem Ko-Kneter zugeführt. Das erhaltene Plastoferritmaterial wird nach dem Abkühlen mit einer Messerschneidmühle gemahlen. Das Granulat wurde mit einer Spritzgußmaschine Allrounder 200, Firma Arburg, mit einer Schmelztemperatur von 305°C und einer Formtemperatur von 80°C zu kleinen zylinderförmigen Plastoferritstäbchen mit einem Durchmesser von 1,8 mm und einer Länge von 5 mm spritzgegossen. Der Bariumferritgehalt der Plastoferritstäbchen wurde durch Veraschen bei 400°C bestimmt und beträgt 75 Gew.-%. Die Koerzitivfeldstärke beträgt 421 kA/m und die remanente Magnetisierung 76 mT. Ein zylinderförmiges Stäbchen wurde in einem Magnetfeld von 800 kA/m senkrecht zur Zylinderachse dauermagnetisiert. Es wurde in der Weise in eine Magnetbandkassette eingebaut, daß das aus dem Plastoferritstäbchen austretende Magnetfeld senkrecht zu dem in einem Abstand von 0,8 mm vorbeilaufenden Magnetband orientiert ist. Die Echolöscheinrichtung ergibt eine Erhöhung und damit Verbesserung der Kopierdämpfung um 8 dB.

## Beispiel 6

Analog zur Versuchsdurchführung in Beispiel 5 wurden Plastoferritstäbchen aus 75 Gew.-% Bariumferritpulver aus Beispiel 1 und 25 Gew.-% High-density Polyethylen, Typ Lupolen 5021 D der Firma BASF AG hergestellt. Die Schmelztemperatur im Ko-Kneter betrug 190°C, in der Spritzgußmaschine 255°C. Die Koerzitivfeldstärke der spritzgegossenen Magnetstäbchen beträgt 420 kA/m, die remanente Magnetisierung 67 mT. Die Echolöscheinrichtung ergibt eine Erhöhung und damit Verbesserung der Kopierdämpfung um 6 dB.

## Beispiel 7

6 kg eines handelsüblichen hergestellten Bariumferrits mit einer Koerzitivfeldstärke von 120 kA/m und einer spezifischen Oberfläche von 1 $m^2$/g wurden 15 Minuten lang unter Zugabe von 1 l Wasser in einer Hochleistungs-Feinstmühle Molinex PE 5 der Firma Netsch mit Hilfe von 15 kg Stahlkugeln ($\emptyset$ = 2 - 3 mm) mit 1500 Upm naß vermahlen. Von der erhaltenen wäßrigen Dispersion wurde der Feststoffanteil abfiltriert und getrocknet. Das feinteilige Bariumferritprodukt wurde anschließend 1 Stunde lang bei 1020°C getempert. Das anfallende Bariumferritpulver wies einen $H_c$-Wert von 500 kA/m und eine spezifische Oberfläche von 2,3 $m^2$/g auf. Das Ferritpulver wurde anschließend, wie in Beispiel 5 beschrieben, mit einem Füllgrad von 88 Gew.-% in Ultramid eingearbeitet.

Im Plastoferritgranulat wurde eine Koerzitivfeldstärke von 180 kA/m gemessen. Damit hat die Einarbeitung des keramisch hergestellten Ferritpulvers in Kunststoff eine Abnahme der Koerzitivfeldstärke um 40 % zur Folge.

## Patentansprüche

1. Verfahren zur Herstellung feinteiliger, nadelförmiger und hochkoerzitiver hexagonaler Ferrite der Formel $MFe_{12}O_{19}$, in der M Barium oder Strontium bedeutet, dadurch gekennzeichnet, daß eine wäßrige Dispersion von nadelförmigem Eisen(III)oxidhydroxid mit einer wäßrigen $MCl_2$-Lösung und einer Natriumcarbonatlösung umgesetzt, die resultierende Mischung erhitzt, der Feststoffanteil der erhaltenen Dispersion von der wäßrigen Phase abgetrennt, ausgewaschen, getrocknet und zerkleinert und das erhaltene Pulver auf Temperaturen von 800 bis 1070°C erhitzt wird.

2. Verfahren zur Herstellung feinteiliger, nadelförmiger und hochkoerzitiver hexagonaler Ferrite der Formel $MFe_{12}O_{19}$, in der M Barium oder Strontium bedeutet gemäß Anspruch 1, dadurch gekennzeichnet, daß das nadelförmige Eisen(III)oxidhydroxid α -FeOOH ist.

3. Verfahren zur Herstellung feinteiliger, nadelförmiger und hochkoerzitiver hexagonaler Ferrite der Formel $MFe_{12}O_{19}$, in der M Barium oder Strontium bedeutet gemäß Anspruch 1, dadurch gekennzeichnet, daß das nadelförmige Eisen(III)oxidhydroxid γ-FeOOH ist.

4. Verfahren nach Anspruch 1 bis 3, dadurch gekennzeichnet, daß das eingesetzte nadelförmige FeOOH eine spezifische Oberfläche von 15 bis 80 $m^2$/g und ein Längen/Dickenverhältnis won 2 bis 30 aufweist.

5. Verfahren nach Anspruch 1 bis 3, dadurch gekennzeichnet, daß der ausgewaschene und getrocknete Feststoffanteil in zerkleinerter Form mit einer Teilchengröße von 0,1 bis 5 mm zur Temperung eingesetzt wird.

6. Verfahren nach Anspruch 1 bis 5, dadurch gekennzeichnet, daß der ausgewaschene und getrocknete Feststoffanteil in zerkleinerter Form mit einer Teilchengröße von 0,1 bis 1 mm zur Temperung eingesetzt wird.

## Claims

1. A process for the preparation of a finely divided acicular hexagonal ferrite which has a high coercive force and is of the formula $MFe_{12}O_{19}$, where M is barium or strontium, wherein an aqueous dispersion of acicular iron (III) oxide hydroxide is reacted with an aqueous $MCl_2$ solution and a sodium carbonate solution, the resulting mixture is heated, the solid part of the resulting dispersion is separated off from the aqueous phase, washed thoroughly, dried and comminuted, and the resulting powder is heated at from 800 to 1,070°C.

2. A process for the preparation of a finely divided acicular hexagonal ferrite which has a high coercive force and is of the formula $MFe_{12}O_{19}$, where M is barium or strontium, as claimed in claim 1, wherein the acicular iron (III) oxide hydroxide is $\alpha$-FeOOH.

3. A process for the preparation of a finely divided acicular hexagonal ferrite which has a high coercive force and is of the formula $MFe_{12}O_{19}$, where M is barium or strontium, as claimed in claim 1, wherein the acicular iron (III) oxide hydroxide is $\gamma$-FeOOH.

4. A process as claimed in claim 1 or 2 or 3, wherein the acicular FeOOH employed has a specific surface area of from 15 to 80 $m^2/g$ and a length/width ratio of from 2 to 30.

5. A process as claimed in claim 1 or 2 or 3, wherein the thoroughly washed and dried solid part is employed for the heating procedure in a comminuted form having a particle size of from 0.1 to 5 mm.

6. A process as claimed in claim 1 or 2 or 3, wherein the thoroughly washed and dried solid part is employed for the heating procedure in a comminuted form having a particle size of from 0.1 to 1 mm.

## Revendications

1. Procédé de préparation de ferrites héxagonaux finement divisés aciculaires et à haute coercitivité, de formule $MFe_{12}O_{19}$ dans laquelle M représente baryum ou strontium caractérisé par le fait que l'on fait réagir une dispersion aqueuse d'hydroxyde d'oxyde de fer (III) aciculaire avec une solution de $MCl_2$ aqueuse et une solution de carbonate de sodium, on chauffe le mélange résultant, on sépare de la phase aqueuse la partie solide de la dispersion obtenue, on épuise par lavage, on sèche et on broie et on chauffe la poudre obtenue à des températures de 800 à 1 070° C.

2. Procédé de préparation de ferrites héxagonaux finement divisés aciculaires et à haute coercitivité, de formule $M Fe_{12}O_{19}$, dans laquelle M représente baryum ou strontium selon la revendication 1, caractérisé par le fait que l'hydroxyde d'oxyde de fer (III) aciculaire est $Fe\alpha$-O-OH.

3. Procédé de préparation de ferrites hexagonaux finement divisés aciculaires et à haute coercitivité, de formule $M Fe_{12}O_{19}$, dans laquelle M représente baryum ou strontium selon la revendication 1, caractérisé par le fait que l'hydroxyde d'oxyde de fer (III) aciculaire est $Fe\text{-}\gamma$-O-OH.

4. Procédé selon les revendications 1 à 3, caractérisé par le fait que le Fe OOH aciculaire introduit possède une superficie spécifique de 15 à 80 $m^2/g$ et un rapport longueur/épaisseur de 2 à 30.

5. Procédé selon les revendications 1 à 3, caractérisé par le fait que la partie solide, épuisée par lavage et séchée est introduite pour la mise en température, sous forme broyée d'une grosseur de particules de 0,1 à 5 mm.

6. Procédé selon les revendications 1 à 3 caractérisé par le fait que la partie solide épuisée par lavage et séchée est introduite, pour la mise en température sous forme broyée d'une grosseur de particules de 0,1 à 1 mm.